(19) **Europäisches Patentamt / European Patent Office / Office européen des brevets**

(11) **EP 1 145 947 B1**

(12) **FASCICULE DE BREVET EUROPEEN**

(45) Date de publication et mention
de la délivrance du brevet:
**15.07.2009  Bulletin 2009/29**

(51) Int Cl.:
***B62M 9/08*** *(2006.01)*

(21) Numéro de dépôt: **01107248.5**

(22) Date de dépôt: **23.03.2001**

(54) **Système de transmission pour une bicyclette**

Antriebssystem für ein Fahrrad

Drive system for bicycle

(84) Etats contractants désignés:
**DE ES IT**

(30) Priorité:  **11.04.2000  FR 0004791**

(43) Date de publication de la demande:
**17.10.2001  Bulletin 2001/42**

(73) Titulaire: **Salomon S.A.**
**74370 Metz-Tessy (FR)**

(72) Inventeurs:
 • **Mercat, Jean-Pierre**
 **01400 Chatillon Sur Chalaronne (FR)**

 • **Cauvin, Bertrand**
 **01600 Trevoux (FR)**

(74) Mandataire: **Lejeune, Benoît**
 **Salomon S.A.**
 **D.J.P.I.**
 **74996 Annecy Cedex 09 (FR)**

(56) Documents cités:

| | |
|---|---|
| **EP-A- 0 786 400** | **EP-A- 0 794 114** |
| **WO-A-99/11515** | **FR-A- 961 520** |
| **GB-A- 418 716** | **GB-A- 449 850** |
| **US-A- 3 901 095** | **US-A- 5 865 062** |

**EP 1 145 947 B1**

**Description**

L'invention concerne un système de transmission pour une bicyclette. Elle concerne également un dispositif de commande de ce système ainsi qu'une bicyclette équipée du système de transmission et du dispositif de commande précités.

Usuellement, une bicyclette est équipée d'un système de transmission comprenant une chaîne de transmission, une cassette de pignons à l'arrière, un ensemble de deux ou trois plateaux à l'avant, et deux dérailleurs arrière et avant pour transférer la chaîne d'un pignon à un autre, respectivement d'un plateau à un autre. Les cassettes de pignons comprennent jusqu'à dix pignons à l'heure actuelle.

Pour un tel système, la plage des rapports de transmission entre la vitesse de rotation du pédalier et la vitesse de rotation de la roue s'étend entre deux ratios extrêmes correspondant pour l'un au plateau le plus grand et le pignon le plus petit, et pour l'autre le plateau le plus petit et le pignon le plus grand.

Entre ces deux rapports, il existe un certain nombre de rapports intermédiaires dépendant du nombre de pignons et de plateaux.

Lors d'une commande de changement de rapports, la variation du rapport de transmission n'a pas la même amplitude selon que l'on change de plateau ou de pignon. On sait que pour les différents plateaux, les plages de rapport obtenues en balayant toute la cassette de pignons se chevauchent. Si bien que sur l'ensemble des rapports possibles qui est égal au nombre de pignons multiplié par le nombre de plateaux, seule une partie, environ la moitié, est réellement exploitée ou réellement utile. Il existe des zones de recouvrement dans les plages de rapports, c'est-à-dire qu'on peut obtenir le même rapport ou quasiment le même rapport avec deux combinaisons différentes entre les plateaux et les pignons. Si l'on souhaite une variation progressive du rapport de transmission, un changement de plateau doit être accompagné d'un changement de un ou deux, voire trois pignons dans le sens inverse pour compenser le saut dû au changement de plateau.

Une telle manoeuvre est relativement lente et provoque une rupture dans la cadence de pédalage. Cette rupture est d'autant plus marquée que le changement de plateau demande que l'on soulage momentanément l'effort exercé sur les pédales, pour diminuer la tension du brin tendu de la chaîne.

En outre un tel système manque de régularité dans la progression des rapports, c'est-à-dire que le taux d'augmentation ou de diminution du rapport de transmission varie de façon irrégulière lorsqu'on change de vitesse, principalement à l'occasion d'un changement de plateau.

Ce taux est lié à la variation du couple que le cycliste exerce sur les pédales. Certains passages de vitesse donnent lieu à des variations importantes de couple ou au contraire à des variations faibles d'où un manque de confort d'utilisation pour le cycliste.

On connaît aussi des dispositifs de commande centralisée qui commandent en synchronisation les dérailleurs avant et arrière de façon à assurer une variation progressive de rapports. En particulier, ces dispositifs sont susceptibles de commander simultanément un changement de plateau et un changement de pignon. Un dispositif de ce type est par exemple décrit dans la demande de brevet FR 2 750 669. L'avantage est que les changements de vitesse sont pilotés par une seule commande, même pour lors d'un changement de plateau. Toutefois, les problèmes de variation progressive des rapports et le déraillement du brin tendu de la chaîne sur l'avant ne sont pas résolus pour autant. De plus, dans les zones de recouvrement, ce système impose la combinaison du plateau et du pignon, il ne laisse pas le choix. En outre, il impose un changement de plusieurs pignons simultanément à un changement de plateau, le système est donc peu flexible.

Pour ces systèmes traditionnels, il se pose en plus un problème lié à l'alignement de la chaîne, c'est-à-dire qu'il est déconseillé d'associer le petit pignon au petit plateau et inversement. Un défaut d'alignement génère des pertes de rendement, des frottements et du bruit lors des changements de pignons ou de plateaux. Certaines combinaisons de pignons et de plateaux sont inutilisées pour cette raison.

Pour réduire le nombre de rapports et éviter les chevauchements, il a été proposé de piloter un changement de rapport de transmission uniquement par un changement de pignon.

Ainsi, la demande de brevet EP 849 155 propose un système de transmission comprenant quatorze pignons à l'arrière et un plateau sur l'avant. Pour résoudre un problème d'encombrement, les pignons sont très proches les uns des autres, et la chaîne a une construction particulière plus étroite qu'une chaîne usuelle. Notamment, la chaîne proposée dans cette demande de brevet a des maillons internes coudés en forme de pont. Une telle chaîne est moins robuste qu'une chaîne usuelle car les maillons internes sont susceptibles de fléchir.

Une autre cassette de quatorze pignons est décrite dans la demande de brevet EP 531 380. Les pignons sont ici juxtaposés, et la chaîne s'engrène sur l'un ou l'autre par ses plaquettes latérales.

Le document WO 00/08380 décrit un dispositif de transmission sur lequel se base le préambule de la revendication 1.

Un premier inconvénient est que ces systèmes demandent des pignons et une chaîne ayant une construction bien spécifique.

Un autre inconvénient est relatif à l'alignement de la chaîne. En effet, le balayage de la cassette de pignon demande à la chaîne de se désaxer de façon importante par rapport à l'angle nominal qui lui est donné par le plateau avant, d'où une usure plus rapide, et des pertes de rendement et du bruit dûs au frottement.

Un but de l'invention est de proposer un système de transmission amélioré qui assure une meilleure progressivité de variation pour le rapport de transmission.

Un autre but est de proposer un système de transmission à deux sources de variation du rapport de transmission, comme le sont les pignons et les plateaux, où pour une même plage de rapports, le nombre de combinaisons est plus réduit, et l'équipement en plateaux et/ou pignons ou équivalent est moins important.

D'autre buts et avantages de l'invention apparaîtront au cours de la description qui va suivre.

Le système de transmission de l'invention est prévu pour une bicyclette ayant un cadre, une roue avant, une roue arrière avec un moyeu et un arbre de moyeu, un pédalier d'entraînement avec un axe de pédalier, et il comprend un dispositif selon la revendication 1.

Selon l'idée générale de l'invention, entre les rapports de transmission correspondant à deux pignons successifs, on crée avec le sous-ensemble de transmission secondaire au moins un rapport intermédiaire. En d'autres termes, en régime normal, le sous-ensemble de transmission secondaire est activé entre deux changements de pignons successifs pour changer le rapport de transmission et créer un rapport intermédiaire. Il est activé dans le sens inverse au moment du changement de pignon suivant.

Les plateaux d'un système traditionnel donnent une variation importante du rapport de transmission, toujours supérieure à celle induite par les pignons. Au lieu de cela, le sous-ensemble secondaire donne ici une variation faible du rapport de transmission, inférieure à celle induite par les pignons.

Avec le système de l'invention, on obtient une plage de rapports équivalente ou même plus étendue qu'avec un système traditionnel avec un nombre réduit de pignons, et une variation des rapports mieux contrôlée, c'est-à-dire plus progressive et plus régulière.

Le changement simultané de pignon et de rapports du sous-ensemble secondaire pose ici moins de problème qu'un changement de plateau traditionnel. En effet, comme cela apparaîtra dans la description qui va suivre, de préférence le sous-ensemble secondaire n'agit pas sur le brin tendu de la chaîne. En outre comme le ratio des rapports de sortie est compris entre **1** et la valeur R voisine de 1, la variation du rapport de transmission qu'il engendre est faible, en tous les cas nettement inférieure à ce qui se produit lors d'un changement de plateau traditionnel.

En outre, comme le changement de rapports du sous-ensemble secondaire se produit à chaque changement de pignon et entre deux changements de pignons successifs, il est plus facile de concevoir une commande centralisée qui pilote les deux sous-ensembles de transmission.

L'invention sera mieux comprise en se référant à la description qui va suivre et aux dessins en annexe qui lui sont rattachés.

La figure 1 est une vue de côté d'une bicyclette.

La figure 2 représente de façon schématique un système de transmission traditionnel.

La figure 3 est un diagramme représentant la variations des rapports obtenue avec le système traditionnel de la figure 2.

La figure 4 illustre de façon schématique l'invention selon un premier mode de mise en oeuvre.

La figure 5 montre schématiquement en vue de côté le premier état du sous-ensemble secondaire.

La figure 6 montre le second état du sous-ensemble secondaire de la figure 5.

La figure 7 est un diagramme qui montre l'évolution du rapport de transmission.

La figure 8 illustre de façon schématique l'invention selon un second mode de mise en oeuvre de l'invention.

La figure 9 montre de façon schématique la structure d'une boîte de vitesse à trois rapports.

La figure 10 est un graphe donnant la variation du rapport de transmission pour le mode de réalisation décrit à l'appui de la figure 8.

La figure 11 est relative à une réalisation ne faisant pas partie de l'invention.

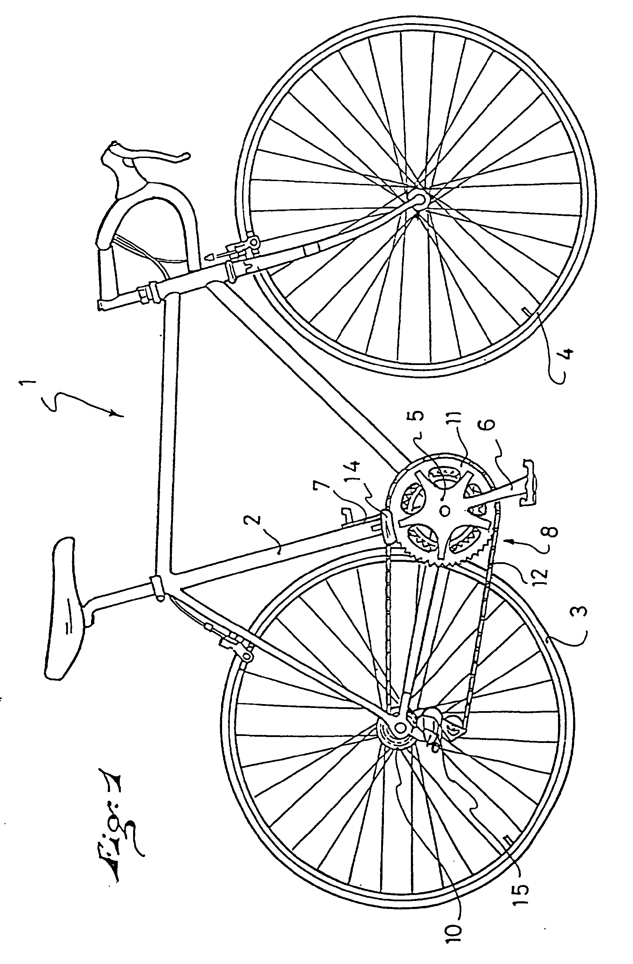

La figure 1 représente une bicyclette 1 qui comprend de façon connue un cadre 2, des roues avant et arrière 3 et 4, un pédalier 5 avec des manivelles 6 et 7 munies de pédales, et un système de transmission 8 qui transmet à la roue arrière la rotation du pédalier.

De façon usuelle, le système de transmission 8 est composé d'une cassette de pignons 10 montée sur le moyeu de la roue arrière, d'un ensemble de plateaux 11 assemblé au pédalier 5, et d'une chaîne de transmission 12. Des dérailleurs avant et arrière 14 et 15 sont par ailleurs prévus pour le passage de la chaîne d'un plateau à l'autre ou d'un pignon à l'autre.

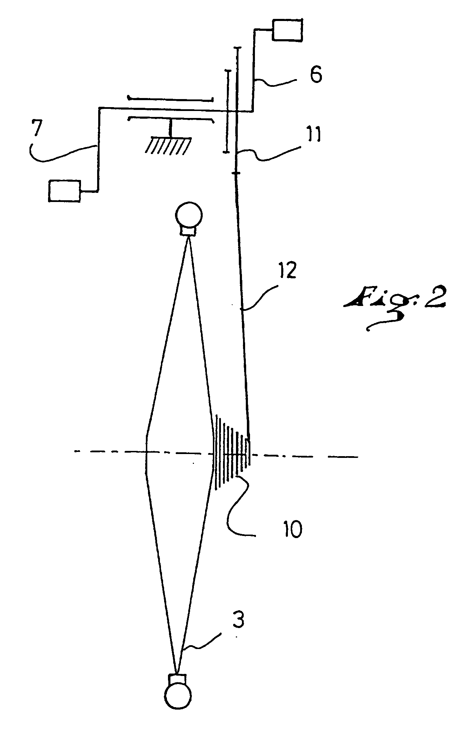

La figure 2 représente de façon schématique un tel système de transmission traditionnel adapté pour un vélo de route.

Par exemple, la cassette de pignons 10 est une cassette usuelle qui comprend neuf pignons de **12, 13, 14,**

**15, 16, 17, 19, 21, 23** dents respectivement. Le nombre de dents des pignons varie grossièrement selon une progression géométrique dont la raison est de l'ordre de 1,08, c'est-à-dire que pour deux pignons adjacents, le ratio des nombres de dents est voisin de 1,08. A l'avant, l'ensemble de plateau comprend deux plateaux de **52** et **42** dents respectivement.

Pour ce système de transmission, le tableau suivant donne les valeurs du rapport de transmission, et l'écart de rapport lors d'un passage de vitesse. Pour simplifier la compréhension, on a choisi arbitrairement un balayage des rapports de transmission depuis le plus grand rapport correspondant au plus grand plateau et au plus petit pignon vers le plus petit rapport correspondant au petit plateau et grand pignon.

Le rapport de transmission est calculé par le ratio des nombres de dents du plateau et du pignon en service. La variation du rapport de transmission est calculée selon la formule suivante :

$$\left[\frac{(\text{précédent rapport de transmission})}{(\text{nouveau rapport de transmission})} - 1\right] \times 100$$

La première colonne désigne par leur nombre de dents le plateau et le pignon en service, 52 x **12** signifiant que la chaîne est en brise sur le plateau de **52** dents et le pignon de **12** dents.

| Plateau/pignon | rapport de transmission | écart de rapport % |
|:---:|:---:|:---:|
| 52 x 12 | 4,33 | |
| 52 x 13 | 4,00 | 8,33 |
| 52 x 14 | 3,71 | 7,69 |
| 52 x 15 | 3,47 | 7,14 |
| 52 x 16 | 3,25 | 6,67 |
| 52 x 17 | 3,06 | 6,25 |
| 52 x 19 | 2,74 | 11,76 |
| 52 x 21 | 2,48 | 10,53 |
| 52 x 23 | 2,26 | 9,52 |
| 42 x 12 | 3,50 | -35,40 |
| 42 x 13 | 3,23 | 8,33 |
| 42 x 14 | 3,00 | 7,69 |
| 42 x 15 | 2,80 | 7,14 |
| 42 x 16 | 2,63 | 6,67 |
| 42 x 17 | 2,47 | 6,25 |
| 42 x 19 | 2,21 | 11,76 |
| 42 x 21 | 2,00 | 10,53 |
| 42 x 23 | 1,83 | 9,52 |

On voit dans le tableau que la plage des rapports de transmission s'étend depuis **4,33** jusqu'à **1,83**, ce qui donne un ratio général de **2,37**.

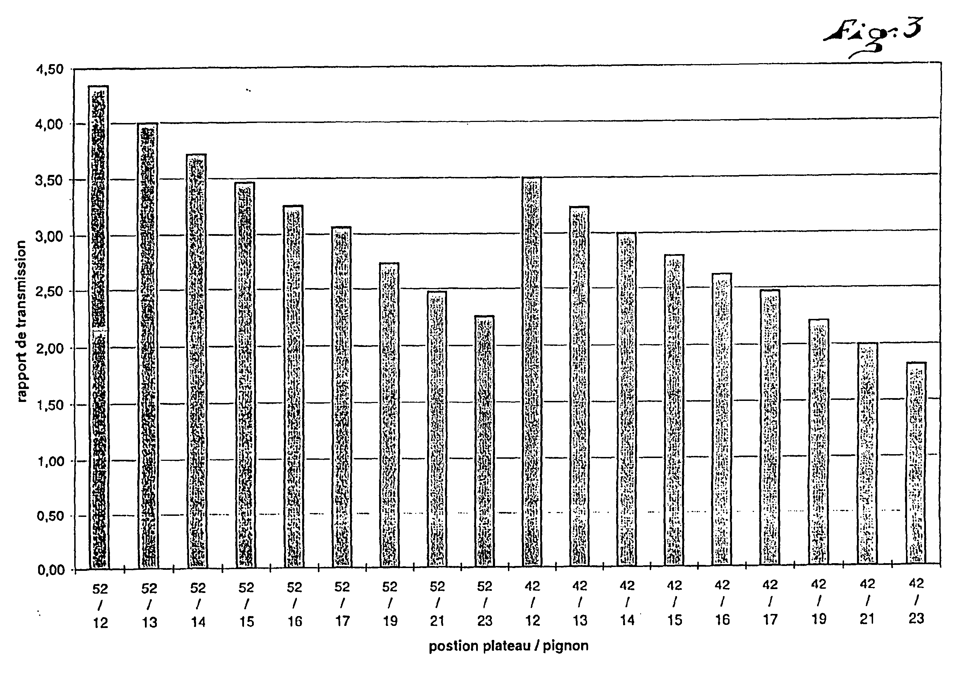

En se reportant au graphe de la figure 3, on voit tout de suite le recouvrement des plages de rapport associées au premier et au second plateaux. Sur les dix huit rapports possibles, entre dix à douze rapports sont effectivement exploitables.

En ce qui concerne la variation du rapport de transmission, qui est représentative du changement de cadence de pédalage accompagnant un changement de rapports, on constate que cette variation n'est pas du tout régulière lors des changements de pignons. Elle décroît régulièrement jusqu'à **6%** tant que le nombre de dents des pignons varie de une dent, puis augmente nettement au-delà de **10%** pour les trois derniers pignons où on a à chaque fois une différence de deux dents. Ceci induit un manque de confort pour le cycliste, car le changement de cadence de pédalage et la variation du couple qui accompagnent un changement de vitesse manquent de régularité sur toute la plage des rapports de transmission.

Un changement de pignon provoque une variation du rapport de transmission qui est comprise globalement entre **6 et 12%**. Un changement de plateau par contre induit une variation du rapport de **(52/42-1)x100=23%**.

Ceci explique le chevauchement des plages de rapports. Un changement de plateau donne en effet une variation de rapport qui est celle de deux voire trois changements de pignons.

Par rapport à cela, l'invention propose d'introduire entre deux pignons successifs au moins un rapport intermédiaire. Parallèlement, la variation de rapport pour deux pignons successifs est sensiblement augmentée. En d'autres termes, le système de transmission selon l'invention comprend un sous-ensemble de transmission primaire formé par un ensemble de pignons, et un sous-ensemble de transmission secondaire à au moins deux vitesses de transmission. Ce sous-ensemble secondaire crée entre deux pignons successifs au moins un rapport de transmission intermédiaire.

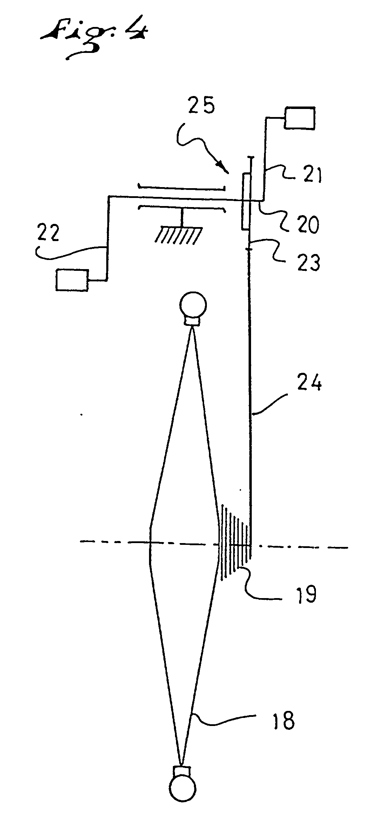

Un premier mode de mise en oeuvre de l'invention est schématisé en figure 4.

On y retrouve une roue arrière 18, et un ensemble de pignons 19 montés sur le moyeu de la roue arrière. Dans le langage de l'invention, ces pignons forment le sous-ensemble de transmission primaire. On a obtenu de bons résultats avec une cassette de huit pignons de **11**, **13**, **15, 18, 21, 25, 30, 36** dents. Toutefois, comme cela apparaîtra plus loin, le nombre de pignons peut être plus réduit en fonction de la plage de rapports de transmission souhaitée.

Le sous-ensemble primaire comprend par ailleurs un dérailleur arrière traditionnel et sa commande, pour le transfert de la chaîne d'un pignon à l'autre. Par exemple, on peut utiliser le dérailleur arrière qui est décrit dans la demande de brevet EP 558 425 au nom de la demanderesse.

Sur l'avant, le système de la figure 4 présente un pédalier avec un axe 20, et deux manivelles 21 et 22. Un plateau 23 unique, ou plutôt une couronne de plateau, est associée au pédalier avant, cette couronne entraîne une chaîne 24. La chaîne est en prise avec la couronne et l'un des pignons.

Selon l'invention, le système de transmission comprend un sous-ensemble de transmission secondaire que l'on a schématisé en 25. Il s'agit ici d'un plateau dont le diamètre externe est extensible. Le plateau a une couronne dentée 23 qui est divisée en secteurs, et les secteurs sont extensibles radialement de façon à augmenter, ou diminuer, la distance d'enroulement de la chaîne par rapport à l'axe 20 du pédalier. Un plateau de ce type est par exemple décrit dans la demande de brevet FR 961 520.

Dans ces conditions, le sous-ensemble secondaire présente le plateau en question, et un mécanisme de commande approprié pour le déplacement des secteurs.

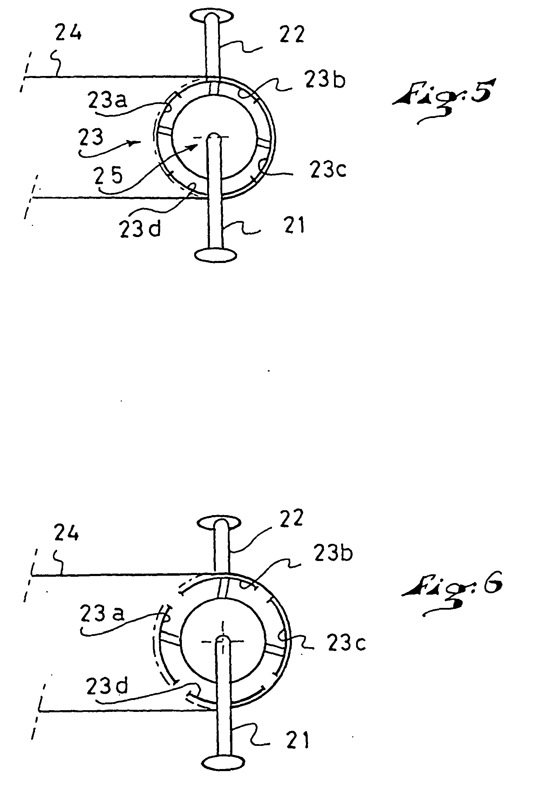

On a obtenu de bons résultats avec un plateau de **44** dents comprenant quatre secteurs extensibles radialement 23a, 23b, 23c, 23d. Dans sa configuration de plus petit diamètre représenté en figure 5, les quatre secteurs sont contigus, si bien que le plateau se comporte comme un plateau traditionnel. Le déplacement en extension des secteurs est déterminé pour qu'il existe entre deux secteurs adjacents un espace égal à un nombre entier du pas de la chaîne. De préférence cet espace est égal à un pas de chaîne, et correspond à une dent.

La figure 6 représente schématiquement le plateau dans ce second état où les secteurs sont expansés radialement. Le plateau se comporte alors comme un plateau de quarante quatre dents. Dans ces conditions, on peut dire que le plateau a un nombre de dents réel de quarante huit dents, et en position d'extension des secteurs un nombre de dents apparent de quarante huit dents.

Quant au mécanisme de commande, il est prévu pour agir sur chaque secteur en fonction de sa position. Pour déplacer les secteurs vers l'extérieur ou vers l'intérieur, de préférence, le mécanisme de commande agit successivement sur chacun des secteurs alors que ce secteur se trouve dans la zone inactive du pédalier, c'est-à-dire dans une phase de remontée sous le brin tendu de la chaîne. De cette façon, le brin tendu de la chaîne est sollicité radialement par rapport à l'axe du pédalier, et non plus transversalement.

Le rapport de transmission de ce système de transmission est égal au ratio entre le nombre de dents réel ou apparent du plateau, et le nombre de dents du pignons en service.

La variation du rapport de transmission lors d'un changement d'état du plateau ou lors d'un changement de pignon est donné par le ratio entre le nombre de dents final et le nombre de dents initial du plateau, ou des pignons, respectivement.

Pour un tel système ayant huit pignons, le nombre de dents **n1, n2, n3, n4, n5, n6, n7, n8** des pignons varie selon une progression géométrique à un nombre entier près. Si **r** est la raison de la progression géométrique, **n1, n2, n3, n4, n5, n6, n7, n8** sont déterminés de telle façon que **n2 = rn1, n3** = **rn2** et ainsi de suite, au nombre entier près.

Si on appelle par ailleurs **N1** et **N2** les nombres de dents réel et apparent du plateau, les variations du rapport de transmission sont respectivement données par les ratios **n1/n2, n2/n3, n3/n4, n4/n5, n5/n6, n6/n7, n7/n8** d'une part, **N1/N2** d'autre part. **N1/N2** correspond en fait au rapport des vitesses d'entraînement de la chaîne que le sous-ensemble 25 est susceptible de générer.

Comme dans le cas précédent, pour simplifier, on considère un balayage des rapports allant du plus grand rapport vers le plus petit.

Dans ces conditions, si **n** désigne la valeur moyenne des ratios **n1/n2, n2/n3, n3/n4, n4/n5, n5/n6, n6/n7,**

**n7/n8** et **R** le ratio **N1/N2,** on détermine les nombres de dents réels et apparents du plateau, et ceux des pignons de façon à respecter la relation **n > R > 1.**

Compte tenu en effet du sens de balayage choisi, **n** est supérieur à **1** par nature. Cette valeur **n** est par ailleurs approximativement égale à la raison **r** de la progression géométrique précédemment évoquée.

La relation **n > R > 1** signifie qu'un changement d'état du plateau est susceptible d'induire une variation de rapport intermédiaire entre la variation induite par un changement de pignons.

On choisit une valeur **R** qui est voisine de la racine carrée de **n**, ou encore voisine de **(1+n)/2** qui en est une valeur approchée.

Quoi qu'il en soit, **R** est voisin de **1** et il est toujours inférieur au plus petit des ratios des nombres de dents de deux pignons successifs.

Dans le cas présent **R = 1,09**.

Ce système est prévu pour fonctionner de la façon suivante. Partant du rapport de transmission le plus grand, le premier changement de vitesse consiste en un changement d'état du plateau, le second en un changement simultané de pignons et d'un changement d'état du plateau pour le ramener à son état initial, puis de nouveau un changement d'état du plateau et ainsi de suite.

Un dispositif de commande centralisé pour commander ce système aurait un dispositif de pilotage centralisé en liaison avec le dérailleur du sous-ensemble primaire et le sous-ensemble secondaire prévu pour adresser alternativement au sous-ensemble secondaire une commande de changement de vitesse dans le sens souhaité de variation du rapport de vitesse, et une commande de changement de vitesse adressée au sous-ensemble primaire dans le sens souhaité de variation combinée à une commande adressée au sous-ensemble secondaire dans le sens de variation inverse au sens souhaité.

Un tel dispositif de commande peut être réalisé de façon mécanique par un double chemin de came monté sur une même poignée de commande, comme cela est décrit par exemple dans la demande de brevet WO 96/25321.

Une autre façon avantageuse de réaliser le dispositif de commande consiste en une gestion électronique de commande des sous-ensembles primaires et secondaires. Un tel dispositif convient particulièrement lorsque le dérailleur du sous-ensemble primaire est conforme à la demande de brevet EP 558 425 précitée, et que le sous-ensemble secondaire est également commandé électriquement, par exemple par un ou plusieurs électroaimants.

Le tableau suivant indique les rapports de transmission et les variations de rapports pour un système comprenant huit pignons respectivement de **11, 13, 15, 18, 21, 25, 30, 36** dents respectivement, et un plateau à deux états correspondant respectivement à **48** et **44** dents. Un tel système est adapté à un vélo de route.

| Etat du plateau | nombre de dents du pignon | rapport de transmission | variation du rapport % |
|---|---|---|---|
| 48 | 11 | 4,36 | |
| 44 | 11 | 4,00 | 9,09 |
| 48 | 13 | 3,69 | 8,33 |
| 44 | 13 | 3,38 | 9,09 |
| 48 | 15 | 3,20 | 5,77 |
| 44 | 15 | 2,93 | 9,09 |
| 48 | 18 | 2,67 | 10,00 |
| 44 | 18 | 2,44 | 9,09 |
| 48 | 21 | 2,29 | 6,94 |
| 44 | 21 | 2,10 | 9,09 |
| 48 | 25 | 1,92 | 9,13 |
| 44 | 25 | 1,76 | 9,09 |
| 48 | 30 | 1,60 | 10,00 |
| 44 | 30 | 1,47 | 9,09 |
| 48 | 36 | 1,33 | 10,00 |
| 44 | 36 | 1,22 | 9,09 |

La plage des rapports de transmission s'étend depuis **4,36** jusqu'à **1,22**, ce qui donne un ratio général de **3,57**.

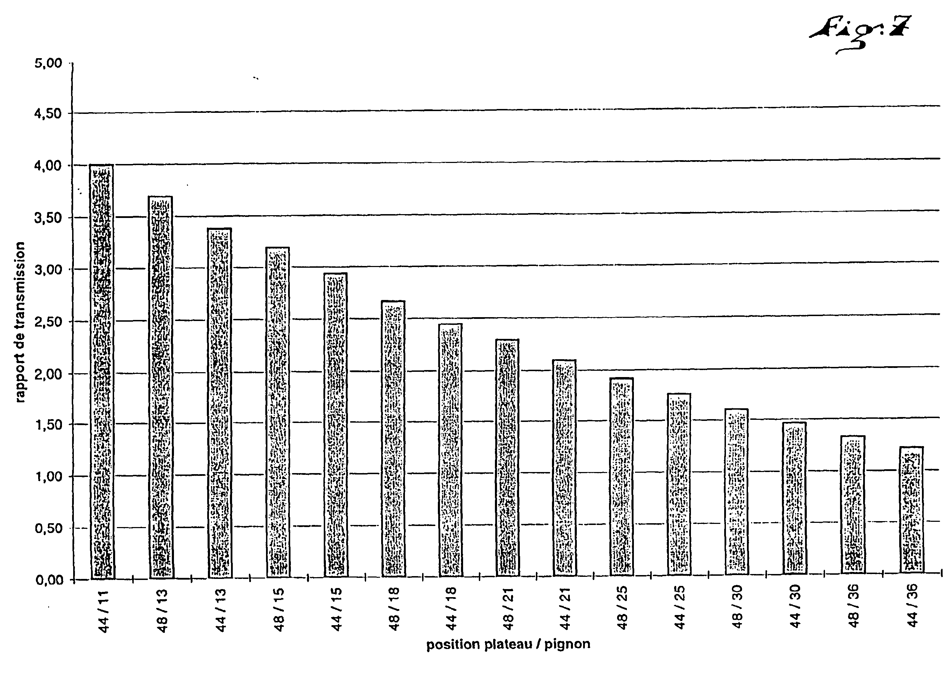

Si l'on compare ce tableau et le graphe de la figure 7 aux résultats du cas précédemment décrit, on constate qu'il n'existe plus aucun chevauchement dans la successions des différents rapports. En outre, la variation des rapports est beaucoup plus régulière et centrée sur une valeur de **8**%, ce qui améliore le confort et la souplesse d'utilisation du système. De plus, la plage des rapports est plus étendue.

Par ailleurs, on peut remarquer qu'une plage de rapports de transmission équivalente à la plage d'un système traditionnel pourrait être couverte avec seulement six pignons, en supprimant les pignons de plus grand diamètre.

En réduisant le nombre de pignons par rapport à un système traditionnel, on atténue les problèmes liés à un défaut d'alignement de la chaîne. Ce défaut d'alignement se produit en effet sur une amplitude angulaire plus réduite.

On réduit également l'encombrement de la cassette de pignons sur le corps de moyeu, ce qui permet d'éloigner l'un de l'autre les flasques d'accrochage des rayons sur le moyeu, d'où il résulte un meilleur équilibrage des tensions de rayons et une plus grande rigidité de la roue. On gagne également du poids au niveau des pignons.

Il est certain que par rapport à un système traditionnel, il y a ici davantage de changements de rapports au niveau du sous-ensemble secondaire.

Toutefois ces changements de rapports se produisent seuls ou en combinaison avec un seul changement de pignon. En outre, ils induisent une variation de rapport à chaque fois voisine de 1. Cette variation est plus réduite que dans le cas traditionnel. Enfin, les changements de rapport sont provoqués par une expansion du plateau, et non par un dérailleur agissant sur le brin tendu de la chaîne. De ce fait la chaîne reste dans le même plan. Le rendement est donc bien meilleur et les temps de transition plus courts.

Naturellement ce mode d'exécution n'est pas limitatif. Notamment, on pourrait adopter d'autres valeurs de nombre de dents. Egalement, on pourrait utiliser un plateau à trois états au lieu de deux. Dans ce cas, si **R** et **R'** désignent les ratios des nombres de dents réels ou apparents successifs du plateau, on aurait la relation suivante

$$n > R \ x \ R' > 1$$

C'est-à-dire qu'au niveau du plateau on considère le ratio du plus grand nombre de dents au plus petit, de telle façon que l'ensemble des états du plateau produise des rapports intermédiaires.

En fonctionnement, avec un tel dispositif, on aurait deux changements successifs d'état du plateau, puis un changement d'état vers la position d'origine combiné à un changement de pignon, et ainsi de suite.

D'autres constructions du sous-ensemble secondaire faisant varier son nombre de dents pourraient également convenir. Par exemple, on pourrait utiliser deux plateaux dont les nombres de dents sont dans le rapport **R**, par exemple quarante huit et quarante quatre dents pour reprendre l'exemple précédemment décrit.

De préférence, on s'arrange pour que le transfert de la chaîne d'un plateau à l'autre se fasse autrement que par une action directe sur le brin tendu de la chaîne, comme le fait la fourchette d'un dérailleur traditionnel.

Une première solution pourrait consister à utiliser des plateaux à secteurs basculants. Un tel dispositif est décrit dans le US 4,580,997. Une autre solution serait d'utiliser des plateaux avec au moins l'un d'eux déformable en spirale. Une construction de ce type est décrite dans la demande FR 99 11198 déposée au nom de la demanderesse et non publiée au jour du dépôt de la présente demande. Dans les deux cas, la déformation du plateau dévie le brin tendu de la chaîne de façon à ce qu'il se dépose en douceur sur l'autre plateau. On évite ainsi de forcer sur le brin tendu de la chaîne.

Une autre solution pourrait consister en deux plateaux avec un transfert de chaîne réalisé au moyen d'un dérailleur traditionnel. Cependant, pour les raisons évoquées en préambule, cette solution n'est pas une solution préférentielle.

Mais comme la différence de diamètre des plateaux est ici plus petite que pour un jeu de plateaux traditionnel, on peut s'attendre à un meilleur fonctionnement.

Pour ce mode de construction où il y a une variation du nombre de dents de plateau, le ratio **R** est le rapport des nombres de dents, il correspond en fait au ratio des vitesses linéaires de la chaîne.

L'invention n'est pas limitée non plus au mode de réalisation du sous-ensemble secondaire qui a été décrit.

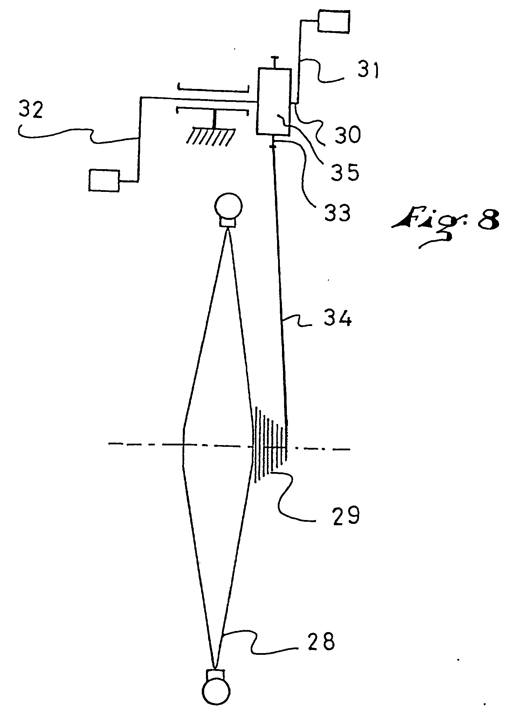

Pour illustrer cela, la figure 8 représente de façon schématique une roue arrière 28, un sous-ensemble de transmission primaire 29 semblable au sous-ensemble 19 précédent. Comme dans le cas précédemment décrit, le système a sur l'avant un pédalier, avec un axe 30, deux manivelles 31, 32.

Le sous-ensemble secondaire est formé ici par une boîte de vitesse schématisée en 35 qui porte à sa périphérie une couronne dentée 33 pour l'entraînement de la chaîne 34.

La boîte de vitesse 35 a une structure connue. Elle est reliée en entrée à l'axe 30 du pédalier, et en sortie à la couronne 33 d'entraînement de la chaîne. La boîte 35 a au moins deux rapports, c'est-à-dire en sortie deux vitesses de rotation différentes variant dans un ratio **R** de la plus grande vitesse à la plus petite.

Dans ces conditions, partant du plus petit pignon vers le plus grand, si **n** est le ratio moyen entre le nombre de dents de deux pignons successifs, **R** est déterminé de telle façon que **n > R > 1**, avec **R** voisin de **1** et de préférence **R** voisin de la racine carrée de **n**.

Ainsi, pour chacun des pignons arrière, la boîte de vitesse 35 peut induire un rapport de transmission intermédiaire entre les rapports donnés par deux pignons successifs.

De préférence, l'un des rapports de la boîte de vitesse est égal à **1**. De cette façon, il est possible d'optimiser le rendement de la boîte, étant donné que les rapports de la boîte de vitesse seront alors tous voisins de **1**, quelle que soit la vitesse sélectionnée en sortie de boîte.

Un tel mode de réalisation présente l'avantage que le ratio **R** peut être déterminé avec moins de contrainte que dans le cas précédent. Ce ratio en effet se rapporte non plus à un nombre de dents de plateau, mais par exemple à des diamètres et nombres de dents d'engrenage. Dans ce cas, le pas des engrenages est totalement indépendant du pas de la chaîne. On peut également jouer sur le nombre de dents de la couronne 33 indépendamment du ratio **R.** On a donc beaucoup plus de facilités pour ajuster le ratio **R** à la valeur souhaitée.

De plus, la couronne 33 est unique, et la chaîne reste dans le même plan en cas de changement de rapport de la boîte de vitess.

Comme dans le cas précédent, au lieu de deux rapports, la boîte 35 pourrait offrir trois rapports de sortie avec des ratios différents.

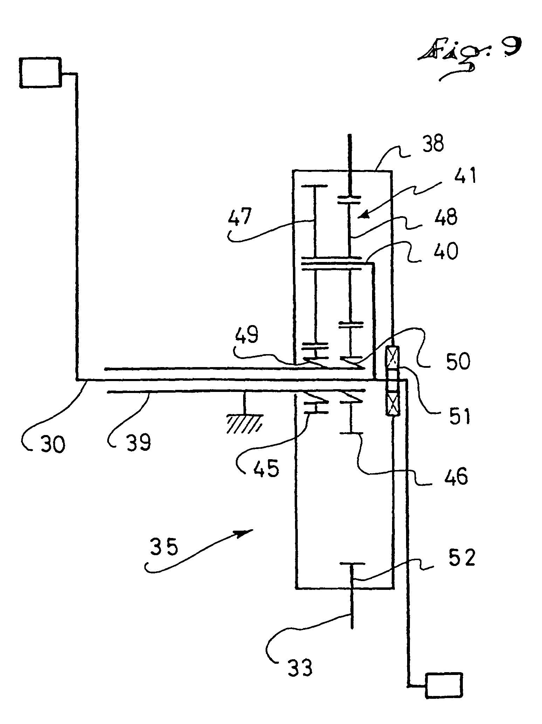

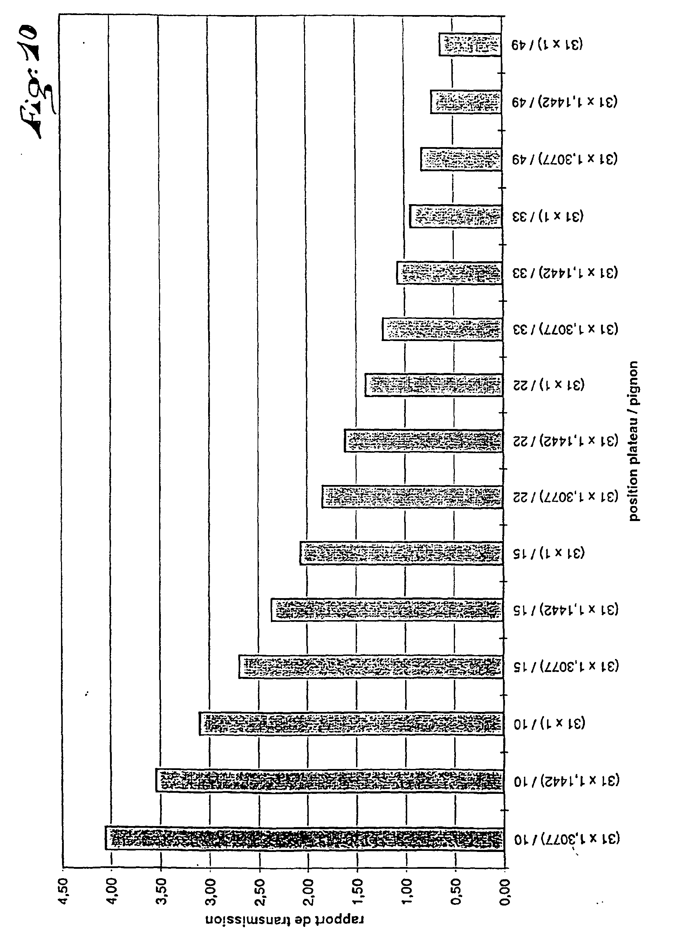

Pour illustrer cela, les figures 9 et 10 illustrent un système de transmission plus adapté pour un vélo tout terrain mettant en oeuvre une boîte de vitesse 35 à trois rapports intégrée au pédalier et associée à une cassette de cinq pignons. Pour un vélo tout terrain, il est intéressant d'avoir une plage de rapport de transmission plus étendue que pour un vélo de route. En outre, entre deux rapports successifs, on peut avoir une variation plus importante que pour un vélo de route. Un taux de variation de l'ordre de 12 à 15% est jugée convenable sur le plan de la souplesse et du confort d'utilisation.

La figure 9 représente de façon schématique la structure de la boîte de vitesse 35 à trains épicycloïdaux. La couronne dentée 33 est assemblée à la périphérie d'un carter 38 monté rotatif autour de l'axe 30 du pédalier et du tube de guidage 39 de cet axe. Le tube de guidage appartient en fait au cadre de la bicyclette.

L'axe 30 du pédalier emmène avec lui en rotation au moins un axe transversal 40 de support et de rotation pour un satellite 41 formé par un engrenage double. De préférence, le nombre de dents des engrenages est choisi divisible par deux ou trois pour que la boîte soit équipée de deux ou trois de ces axes 40 et de ces satellites répartis en étoile à 180 ou 120 degrés l'un de l'autre autour de l'axe 30.

Deux engrenages 45 et 46 sont par ailleurs en prise avec les roues dentées 47 et 48 du satellite 41. Ces engrenages sont montés en rotation autour de l'axe 30 et son tube de guidage 39. Ils sont reliés au tube de guidage par un mécanisme de blocage débrayable, respectivement 49 et 50. En position embrayée, chacun de ces deux mécanismes solidarise au tube de guidage, c'est-à-dire au cadre, l'engrenage auquel il est associé. Le mécanisme de commande est de tout type approprié, par exemple un manchon cannelé mobile le long de l'axe du tube 39, dont les cannelures viennent en prise avec des cannelures complémentaires de l'engrenage. On pourrait également utiliser des mécanismes de roue libre avec un cliquet de blocage commandé à distance, dans ce cas, le mécanisme pourrait être à blocage unidirectionnel seulement.

Un troisième mécanisme de roue libre à blocage unidirectionnel 51 relie l'axe 30 du pédalier au carter 38.

Les trois mécanismes 49, 50 et 51 sont bloquants dans le sens de rotation qui correspond au sens normal de rotation du pédalier.

Enfin, la boîte 35 présente vers l'intérieur du carter une roue dentée 52 avec une denture intérieure en prise sur l'engrenage 48 du satellite 41.

Dans le mode de réalisation illustré, la roue dentée 52 a **78** dents, les engrenages 46 et 48 ont respectivement **24** dents et **27** dents, les engrenages 45 et 47 ont respectivement **15** et **36** dents.

Dans ces conditions, lorsqu'aucun mécanisme 49 ou 50 est en état de blocage, l'axe 30 entraîne le carter 38 et la couronne 33 en prise directe par l'intermédiaire de la roue libre 44 qui se trouve alors en position de blocage. Le rapport de transmission de la boîte est de **1/1**, c'est-à-dire les axes 40, les satellites 41 et les engrenages 45 et 46 tournent avec le carter et la roue 51 à la même vitesse de rotation.

Lorsque le mécanisme 49 est piloté en position de blocage, l'engrenage 45 est immobilisé par rapport au tube 39 du cadre. Le satellite 41 étant entraîné en rotation autour de l'axe 30 par le pédalier, l'immobilisation de l'engrenage 45 oblige le satellite à tourner autour de son axe 40. Le satellite entraîne alors le carter 38 par l'intermédiaire de la roue dentée 52 en prise avec l'engrenage 48 du satellite. Le carter est entraîné à une vitesse de rotation supérieure à celle de l'axe du pédalier, si bien que le mécanisme de roue libre 51 débraye de lui-même.

Compte tenu des nombres de dents des différents engrenages, le rapport de vitesse entre la vitesse de sortie du carter et la vitesse d'entrée du pédalier est égal à **R1 = 1,1442.**

Si l'autre mécanisme 50 est bloqué, alors l'engrenage 46 s'immobilise autour du tube 39 forçant ainsi le satellite 41 à tourner relativement à lui. L'engrenage 48 du satellite entraîne directement le carter 38 par sa roue dentée 52.

Compte tenu des nombres de dents des différents engrenages 46, 48 et 52, le rapport de vitesse entre la vitesse de rotation du carter et la vitesse d'entrée du pédalier est égal à **R2 = 1,3076.** Comme dans le cas précédent, la roue libre 51 est débrayée car le carter tourne plus vite que le pédalier.

De plus, comme le rapport est ici supérieur au rapport obtenu avec le blocage du mécanisme 49, cela signifie que le satellite 41 entraîne dans sa rotation l'engrenage 45 et que le mécanisme de roue libre 49 se débraye de lui-même. Ceci permet de simplifier le pilotage des deux mécanismes 49 et 50. Dans ces conditions, il y aurait en effet que trois commandes de pilotage. Selon la première commande, aucun des deux mécanismes 49, 50 n'est piloté en position de blocage, et la boîte 35 fonctionne alors avec un rapport égal à **1**. Selon une deuxième commande, le mécanisme 49 est piloté en position de blocage, le rapport devient **R1 = 1,1442**. Selon une troisième commande, le mécanisme 50 est piloté en position de blocage, le rapport passe alors à **R2 = 1,3076**. Dans cette troisième commande, le mécanisme 49 peut rester en position de blocage, il sera de toutes les façons débrayé.

Ces trois états de la boîte 35 sont utilisés entre deux changements de pignons arrière successifs.

Pour la transmission de la chaîne, on a choisi une couronne 33 ayant **31** dents, et une cassette de cinq pignons arrière ayant respectivement **10, 15, 22, 33, 49** dents, c'est-à-dire un nombre de dents variant selon une progression géométrique au nombre entier près, dont la raison est égale à 1,5.

Les rapports de la boîte de vitesse 35 ont en fait été déterminés pour s'intercaler entre deux changements de pignon successifs.

Le ratio du nombre de dents de deux pignons successifs varie entre **1,446** et **1,5,** dans ces conditions, le rapport **n** de deux pignons successifs est supérieur ou égal à **1,446**. Les rapports de vitesse de la boîte 35 ont été choisis entre la valeur **1** et la valeur **n = 1,446**. De plus, pour améliorer la progressivité des rapports intermédiaires, le rapports **R1** et **R2** de la boîte de vitesse 35 ont été déterminés de telle façon que **R1** soit voisin de la racine cubique de **n,** et **R2** voisin du carrée de **R1**.

Dans l'exemple choisi, $R1^3 = 1,5$ et $R1^2 = 1,309$ qui sont des valeurs convenables. Dans ces conditions, le tableau suivant donne les rapports de transmission successifs, du plus grand rapport vers le plus petit, ainsi que les variations en pourcentage de ce rapport.

| Nombre de dents du plateau avant | rapport de la boîte de vitesse | position du sous-ensemble secondaire | nombre de dents du pignon arrière | rapport de transmission | variation du rapport de transmission % |
|---|---|---|---|---|---|
| 31 | 1,3077 | 31 x 1,3077 | 10 | 4,05 | |
| 31 | 1,1442 | 31 x 1,1442 | 10 | 3,55 | 14,29 |
| 31 | 1 | 31 x 1 | 10 | 3,10 | 14,42 |
| 31 | 1,3077 | 31 x 1,3077 | 15 | 2,70 | 14,71 |
| 31 | 1,1442 | 31 x 1,1442 | 15 | 2,36 | 14,29 |
| 31 | 1 | 31 x 1 | 15 | 2,07 | 14,42 |
| 31 | 1,3077 | 31 x 1,3077 | 22 | 1,84 | 12,16 |
| 31 | 1,1442 | 31 x 1,1442 | 22 | 1,61 | 14,29 |
| 31 | 1 | 31 x 1 | 22 | 1,41 | 14,42 |
| 31 | 1,3077 | 31 x 1,3077 | 33 | 1,23 | 14,71 |
| 31 | 1,1442 | 31 x 1,1442 | 33 | 1,07 | 14,29 |
| 31 | 1 | 31 x 1 | 33 | 0,94 | 14,42 |
| 31 | 1,3077 | 31 x 1,3077 | 49 | 0,83 | 13,55 |
| 31 | 1,1442 | 31 x 1,1442 | 49 | 0,72 | 14,29 |
| 31 | 1 | 31 x 1 | 49 | 0,63 | 14,42 |

La figure 10 est un graphe qui montre l'évolution du rapport de transmission.

En regardant le tableau et le graphe, on peut constater que les rapports de transmission s'étendant dans une plage de **4,05 à 0,63,** soit un ratio général de **6,43** pour cinq pignons à l'arrière. En ce qui concerne la variation du rapport, on peut voir d'après le tableau qu'elle est d'une très grande régularité, et qu'elle se situe aux alentours de **14%**, ce qui donne un système de transmission très progressif, et sans aucun chevauchement.

Le ratio général est plus élevé que pour un système traditionnel, alors que la variation est plus faible. Pour un système traditionnel, on compte généralement un ratio de **6,18** et une variation moyenne de **18,2%**.

Enfin, le rapport de transmission du sous-ensemble secondaire peut être modifié sans aucune intervention sur la chaîne, en particulier sur le brin tendu de la chaîne. La chaîne reste dans le même plan. Un changement de rapport est donc plus rapide et plus facile qu'avec un dérailleur avant traditionnel.

En variante, on pourrait choisir les rapports de la boîte 35 de façon différente et affecter un rapport 1/1 non pas à la vitesse la plus lente de la couronne 33 mais à la vitesse la plus rapide ou encore la vitesse intermédiaire.

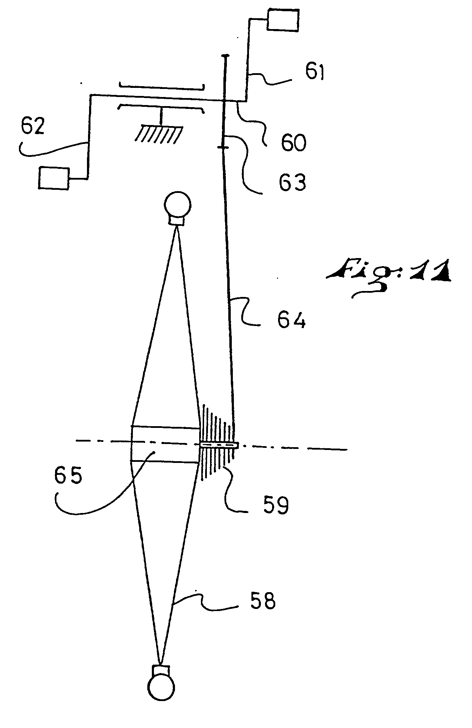

La figure 11 est relative à une réalisation ne faisant pas partie de l'invention.

Cette figure représente de façon schématique une roue arrière de bicyclette 58. Sur l'avant, le système de transmission a un pédalier avec un axe 60, deux manivelles 61 et 62 et un plateau 63 solidaire en rotation de l'axe 60 et des manivelles 61, 62, avec une couronne unique d'entraînement de la chaîne.

Sur l'arrière, le système comprend un ensemble de pignons 59 montés sur l'arbre du moyeu, et une boîte de vitesse schématisée en 65 qui est située entre le moyeu et la roue. C'est-à-dire que la boîte de vitesse est connectée en entrée sur l'arbre du moyeu et qu'elle est reliée en sortie aux rayons et à la jante de la roue. La boîte de vitesse 65 est en fait intégrée dans le moyeu de la roue. Une telle boîte est par exemple décrite dans la demande de brevet EP 554 874.

Comme dans les cas précédents, les pignons qui forment le sous-ensemble de transmission primaire sont associés à un dérailleur arrière traditionnel. Le ratio moyen du nombre de dents est égal à **n** en partant du pignon le plus petit au pignon de plus grand diamètre.

Le sous-ensemble de transmission secondaire a en sortie au moins deux rapports dont le ratio de la vitesse de sortie la plus grande à la vitesse la plus petite est égal à **R, R** étant voisin de **1** et compris entre **n** et **1.**

Comme dans le cas précédent, de préférence, l'une des vitesses de sortie de la boîte de vitesse est égale à la vitesse d'entrée, pour que globalement le rapport de réduction soit voisin de **1,** afin que le rendement général de la boîte de vitesse soit lui aussi proche de **1.** De préférence, **R** est voisin de la racine carrée de **n** ou encore **(1+n)/2** qui en est une valeur approchée.

Ce système de transmission fonctionne de la même façon que les systèmes précédemment décrits.

Ainsi, l'invention procure une plus grande progressivité dans le passage successif des pignons, une absence de chevauchement des plages de rapports de transmission, une plus grande régularité dans la variation du rapport de transmission. En outre, on peut utiliser un nombre de pignons réduits, et un nombre significatif d'éléments standards du commerce. Les pignons, le dérailleur arrière, et la chaîne peuvent en effet être des éléments standards. Ce qui revient à dire qu'une bicyclette existante peut être transformée facilement pour recevoir ce nouveau système de transmission.

A propos du sous-ensemble de transmission secondaire, on a trouvé que deux vitesses de sortie, ce qui revient à deux états du plateau pour le premier mode de réalisation, étaient préférable. Trois rapports de sortie conviennent également, mais on ne voit pas d'intérêt à aller au-delà. La raison est que le sous-ensemble primaire avec son dérailleur présente un très bon rendement lors d'un changement de pignon, et un très bon compromis entre le poids et les performances qu'il est difficile d'atteindre avec un autre mode de changement de vitesse. De ce fait, on préfère limiter à deux ou trois le nombre de rapports en sortie du sous-ensemble de transmission secondaire pour profiter au mieux des performances du sous-ensemble primaire.

En outre, on pourrait appliquer l'idée générale de l'invention à une partie seulement des pignons. On a dit que les nombres de dents des pignons suivaient grossièrement une série géométrique, et que le sous-ensemble secondaire vient placer un rapport intermédiaire entre les rapports de deux pignons successifs. Cette série géométrique pourrait être interrompue ou raccourcie par un pignon dont le nombre de dents serait dans un rapport **R** au nombre entier près, au lieu d'être dans le rapport **n** avec le pignon précédent. Sur ce pignon, il n'y aurait pas de changement de vitesse du sous-ensemble secondaire. On passerait directement au pignon suivant. Le mécanisme de commande dans ce cas serait un peu modifié et tiendrait compte de ce saut. Par exemple, si l'on reprend le dernier tableau, au lieu du pignon de **49** dents qui donne trois rapports successifs de **0,83, 0,72** et **0,63,** on pourrait mettre un pignon de 38 dents qui donne sur le rapport **1/1** de la boîte de vitesse un rapport de transmission de **0,82** et une variation de **14%** vis à vis du rapport précédent. Ce pignon de **38** dents serait prévu pour être utilisé seulement avec le rapport **1/1** de la boîte. Partant de la position précédente, il n'y aurait qu'un changement de pignon pour atteindre cette position. Il n'y aurait pas de changement de rapport du sous-ensemble secondaire. Ceci permet d'ajuster l'étendue de la plage des rapports, et aussi d'ajuster le rapport de transmission à la valeur voulue.

Selon un autre exemple, pour le tableau relatif au plateau extensible, le passage sur le pignon de **15** dents donne un rapport de transmission de **3,20** avec une variation de **5,77%** relativement au rapport précédent. Pour l'ajuster à une valeur plus proche de **9%,** on pourrait passer sur un pignon de **14** dents en restant sur la position **44** dents du plateau et en ne modifiant pas l'état du plateau pour ce pignon. La variation serait alors de **7,69%**. Puis on pourrait passer sur un pignon de **16** dents avec un changement d'état du plateau et continuer avec un changement d'état du plateau et ainsi de suite en reprenant la série géométrique pour les nombres de dents de pignons sur la base de ce pignon de **16** dents.

Pour la boîte à trois rapports, on pourrait de la même façon n'utiliser occasionnellement qu'un seul ou deux rapports seulement entre deux pignons successifs.

En fin de compte, il suffit selon l'invention, que le sous-ensemble secondaire introduise au moins un rapport intermédiaire pour une partie des pignons seulement.

Naturellement, la présente description n'est donnée qu'à titre indicatif, et l'on pourrait adopter d'autres mises en oeuvre de l'invention sans pour autant sortir du cadre de celle-ci.

## Revendications

1. Dispositif comprenant un système de transmission prévu pour une bicyclette ayant un cadre, une roue avant, une roue arrière avec un moyeu et un arbre de moyeu, un pédalier d'entraînement avec un axe de pédalier, comprenant une chaîne de transmission (24, 34, 64), un sous-ensemble de transmission primaire (19, 29, 59) ayant un jeu de pignons prévus pour être montés sur la roue arrière (18, 28, 58) dont le nombre de dents varie pour au moins une partie d'entre eux globalement selon une progression géométrique avec un ratio des nombres de dents de deux pignons adjacents supérieur ou égal à une valeur n telle que **n** supérieure à 1, avec un dérailleur arrière (15) prévu pour transférer la chaîne d'un pignon donné à un pignon adjacent, un sous-ensemble de transmission secondaire (25, 35, 65) associé au pédalier à au moins deux rapports de sortie d'entraînement comprenant un plateau formant une couronne unique d'entraînement de la chaîne et opérant un changement de rapport en gardant la chaîne dans le même plan, ledit dispositif comprenant un mécanisme de commande prévu pour agir, au moins, sur le sous-ensemble de transmission secondaire du système de transmission, par un changement d'état du plateau (25), ou un changement d'état d'une boite de vitesse (35, 65) **caractérisé en ce que** lesdits au moins deux rapports de sortie du sous-ensemble de transmission secondaire sont tels que le ratio de la vitesse d'entraînement la plus grande à la vitesse d'entraînement la plus petite est égal à une valeur R comprise entre 1 et **n**, le rapport **R** étant voisin de la racine carré de **n** ou de **(1 + n)/2** et par le fait que le mécanisme de commande comprend un dispositif de pilotage centralisé en liaison avec le dérailleur (15) associé au sous-ensemble primaire et avec le sous-ensemble secondaire (25, 35, 65) prévu pour adresser alternativement deux types de commande, une première commande de changement de rapports adressée au sous-ensemble secondaire dans le sens souhaité de variation du rapport de vitesse, et une seconde commande de changement de rapports adressée simultanément au sous-ensemble primaire dans le sens souhaité de variation et au sous-ensemble secondaire dans le sens de variation inverse au sens de variation souhaité, **en ce que** le dérailleur arrière (15) est piloté par une commande électrique, que le sous-ensemble secondaire (25, 35, 65) est piloté par une commande électrique et que le dispositif de pilotage centralisé comprend un dispositif de gestion électronique de commandes adressées respectivement au dérailleur arrière et au sous-ensemble de transmission secondaire, de façon à produire une variation progressive et sans chevauchement du rapport de transmission.

2. Dispositif selon la revendication 1, **caractérisé en ce que** le mécanisme de commande agit sur le sous-ensemble de transmission primaire (19, 29, 59) et sur le sous-ensemble de transmission secondaire (25, 35, 65).

3. Dispositif selon l'une des revendications 1 à 2, **caractérisé par le fait que** le sous-ensemble de transmission secondaire (25, 35, 65) est activé entre deux changements de pignons successifs pour changer le rapport de transmission et créer un rapport intermédiaire.

4. Dispositif selon l'une des revendications 1 à 3, **caractérisé par le fait que** le sous-ensemble de transmission secondaire (25) est formé par un plateau avant (23) ayant une couronne d'entraînement de la chaîne dont le diamètre varie selon deux ou trois états.

5. Dispositif selon la revendication 4, **caractérisé par le fait que** le plateau (23) a une couronne formée par quatre secteurs radialement extensibles selon deux ou trois positions.

6. Dispositif selon l'une des revendications 1 à 3, **caractérisé par le fait que** le sous-ensemble de transmission secondaire comprend une couronne unique (63) et une boîte de vitesse (35) à deux ou trois rapports de sortie, qui est prévu pour recevoir en entrée l'axe (30) de pédalier, et pour entraîner en sortie la couronne d'entraînement (33) de la chaîne.

7. Dispositif selon la revendication 6, **caractérisé par le fait que** l'une au moins des vitesses de sortie de la boîte de vitesse est égale à la vitesse d'entrée.

8. Bicyclette ayant un cadre, une roue avant, une roue arrière avec un moyeu et un arbre de moyeu, un pédalier d'entraînement avec un axe de pédalier, comprenant un dispositif selon la revendication 1.

**Claims**

1. Device comprising a transmission system provided for a bicycle having a frame, a front wheel, a rear wheel with a hub and a hub shaft, and a drive bottom bracket assembly with a crank axle, including a transmission chain (24, 34, 64), a primary transmission sub-assembly (19, 29, 59) having a set of sprockets provided to be mounted on the rear wheel (18, 28, 58), whose number of teeth varies generally, for at least a portion of them, along a geometric progression with a ratio of the numbers of teeth of two adjacent sprockets greater than or equal to a value n such as n greater than 1, with a rear derailleur (15) provided for transferring the chain from a given sprocket to an adjacent sprocket, a secondary transmission sub-assembly (25, 35, 65) associated with the bottom bracket assembly having at least two drive output ratios including a chain wheel forming a single crown for driving the chain and carrying out a change in ratio by maintaining the chain in the same plane, said device including a control mechanism provided to act, at least on the secondary transmission sub-assembly of the transmission system, by a change in the state of the plate (25), or a change in the state of a gear box (35, 65), **characterized in that** said at least two output ratios of the secondary transmission sub-assembly are such that the ratio of the highest drive speed to the lowest drive speed is equal to a value R comprised between 1 and n, the ratio R being close to the square root of n or of (1 + n) /2, **in that** the control mechanism includes a centralized guiding device connected to the derailleur (15) associated with the primary sub-assembly and with the secondary sub-assembly (25, 35, 65) provided to alternatively address two types of controls, a first control for changing ratios addressed to the secondary sub-assembly in the desired direction for the variation in the speed ratio, and a second control for changing ratios addressed simultaneously to the primary sub-assembly in the desired variation direction and to the secondary sub-assembly in the variation direction opposite the desired variation direction, **in that** the rear derailleur (15) is guided by an electric control, that the secondary sub-assembly (25, 35, 65) is guided by an electric control and that the centralized guiding device includes an electronic device for managing the controls addressed to the rear derailleur and to the secondary transmission sub-assembly, respectively, so as to produce a progressive and overlap-free variation in the transmission ratio.

2. Device according to claim 1, **characterized in that** the control mechanism acts on the primary transmission sub-assembly (19, 29, 59) and on the secondary transmission sub-assembly (25, 35, 65).

3. Device according to one of claims 1 to 2, **characterized in that** the secondary transmission sub-assembly (25, 35, 65) is activated between two successive changes of sprockets in order to change the transmission ratio and to create an intermediate ratio.

4. Device according to one of claims 1 to 3, **characterized in that** the secondary transmission sub-assembly (25, 35, 65) is formed by a front chain wheel (23) having a crown for driving the chain, whose diameter varies according to two or three states.

5. Device according to claim 4, **characterized in that** the chain wheel (23) has a crown formed by four sectors radially extensible according to two or three positions.

6. Device according to one of claims 1 to 3, **characterized in that** the secondary transmission sub-assembly includes a single crown (63) and a gear box (35) having two or three output ratios, which is provided to receive at the input the crank axle (30), and to drive at the output the crown (33) for driving the chain.

7. Device according to claim 6, **characterized in that** at least one of the output speeds of the gear box is equal to the input speed.

8. Bicycle having a frame, a front wheel, a rear wheel with a hub and a hub shaft, a drive bottom bracket assembly with a crank axle, including a device according to claim 1.

**Patentansprüche**

1. Vorrichtung, welche ein Übertragungssystem umfasst, welches für ein Fahrrad vorgesehen ist, das einen Rahmen, ein vorderes Rad, ein hinteres Rad, mit einer Nabe und einer Nabenwelle, einem Betätigungspedal mit einer Pedalachse, eine Übetragungskette (24, 34, 64), eine erste Übertragungsuntergesamtheit (19, 29, 59), welche einen Ritzelsatz aufweist, der vorgesehen ist, um auf dem hinteren Rad (18, 28, 58) montiert zu werden, umfasst, dessen Zackenanzahl für zumindest einen Teil unter ihnen variiert, insgesamt gemäß einer geometrischen Progression mit einem Zackenanzahlverhältnis von zwei aneinanderliegenden Ritzen höher oder gleich einem Wert n, so dass n größer als 1 ist, mit einem hinteren Umwerfer, der vorgesehen ist, um die Kette von einem gegebenen Ritzel auf ein benachbartes Ritzel zu übertragen, eine zweite Übertragungsuntergesesamtheit (25, 35, 65), welche mit dem Pedal bei zumindest zwei Ausgangsbetätigungsgängen verbunden ist, wobei sie eine Platte umfasst, welche eine einzige Betätiguiigskloiie der Kette bildet und ein Wechsel des Gangs herbeiführt, wobei die Kette in derselben Ebene gehalten wird, wobei die Vorrichtung einen Steuermechanismus umfasst, der vorgesehen ist, um zumindest auf der zweiten Übertragungsuntergesamtheit des Übertragungssystems zu wirken durch einen Wechsel des Zustandes der Platte (25) oder einen Wechsel des Zustandes eines Getriebes (35, 65) **dadurch gekennzeichnet, dass** die zumindest zwei Ausgangsgänge der zweiten Übertragungsuutergesamtheit so sind, dass das Verhältnis der größten Betätigungsgeschwindigkeit zu der kleinsten Betätigungsgeschwindigkeit gleich einem Wert R ist, welcher zwischen 1 und n liegt, wobei das Verhältnis R ungefähr die Quadratwurzel von n oder von (1 + n)/2 ist und **dadurch gekennzeichnet, dass** der Steuermechanismus eine zentrale Bedienungsvorrichtung in Verbindung mit dem Umwerfer (15) umfasst, welcher mit der ersten Untergesamtheit und der zweiten Untergesamtheit (25, 35, 65) verbunden ist, welche vorgesehen ist, um alternativ zwei Steuerungsarten anzugehen, eine erste Gangwechselsteuerung, die an die zweite Untergesamtheit in der gewünschten Variationsrichtung des Gangs gerichtet ist, und einen zweiten Befehl zum Wechsel des Gangs, welcher gleichzeitig an die erste Untergesamtheit in der gewünschten Variationsrichtung und an die zweite Untergesamtheit in der umgekehrten Variationsrichtung zu der gewünschten Variation gerichtet ist, **dadurch, dass** der hintere Umwerfer (15) durch eine elektrische Steuerung bedient wird, dass die zweite Untergesamtheit (25, 35, 65) durch eine elektrische Steuerung bedient wird und dass die zentrale Bedienungsvorrichtung eine elektronische Bedienungsvorrichtung umfasst für die Steuerung, welche jeweils an den hinteren Umwerfer und an die zweite Übertragungsuntergesamtheit gerichtet sind, in der Weise um eine progressive Variation und ohne Übereinandergreifen des Übertragungsgangs zu erzeugen.

2. Vorrichtung nach Anspruch 1, **dadurch gekennzeichnet, dass** der Steuerungsmeohanismus auf die erste Übertragungsuntergesamtheit (19, 29, 59) und auf die zweite Übertragungsuntergesamtheit (25, 35, 65) wirkt.

3. Vorrichtung nach einem der Ansprüche 1 oder 2, **dadurch gekennzeichnet, dass** die zweite Übertragungsuntergosamtheit (25, 35, 65) zwischen zwei aufeinanderfolgenden Ritzelwechseln aktiviert wird, um den Übertragungsgang zu wechseln und um ein Zwischenverhältnis zu erzeugen.

4. Vorrichtung nach einem der Ansprüche 1 bis 3, **dadurch gekennzeichnet, dass** die zweite Übertragungsuntergesamtheit (25) durch eine vordere Platte (23) gebildet wird, welche eine Betätigungskrone der Kette aufweist, deren Durchmesser gemäß zweier oder dreier Zustände variiert.

5. Vorrichtung nach Anspruch 4, **dadurch gekennzeichnet, dass** die Platte 23 eine Krone aufweist, welche durch vier Sektoren gebildet wird, welche radial ausdehnbar in zwei oder drei Positionen ist.

6. Vorrichtung nach einem der Ansprüche 1 bis 3, **dadurch gekennzeichnet, dass** die zweite Übeitragungsuntergesamtheit eine einzige Krone (63) und ein Getriebe (35) mit zwei oder drei Ausgangsgängen umfasst, welche vorgesehen ist, um am Eingang eine Achse (30) des Pedals aufzunehmen und um am Ausgang die Betätigungskrone (33) der Kette zu betätigen.

7. Vorrichtung nach Anspruch 6, **dadurch gekennzeichnet, dass** zumindest einer der Ausgangsgänge des Getriebes gleich dem Eingangsgang ist.

8. Fahrrad, welches einen Rahmen, ein vorderes Rad, ein hinteres Rad mit einer Nabe und einer Nebenwelle, einem Betätigungspedal mit einer Pedalachse aufweist, umfassend eine Vorrichtung nach Anspruch 1.

Fig. 1

*Fig. 2*

Fig. 3

Fig. 4

Fig. 5

Fig. 6

Fig. 7

rapport de transmission

5,00 — 4,50 — 4,00 — 3,50 — 3,00 — 2,50 — 2,00 — 1,50 — 1,00 — 0,50 — 0,00

position plateau / pignon

44 / 11 · 48 / 13 · 44 / 13 · 48 / 15 · 44 / 15 · 48 / 18 · 44 / 18 · 48 / 21 · 44 / 21 · 48 / 25 · 44 / 25 · 48 / 30 · 44 / 30 · 48 / 36 · 44 / 36

*Fig. 8*

Fig. 9

Fig. 10

*Fig: 11*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2750669
- EP 849155 A
- EP 531380 A
- WO 0008380 A
- EP 558425 A
- FR 961520
- WO 9625321 A
- US 4580997 A
- FR 9911198
- EP 554874 A